# EUROPEAN PATENT SPECIFICATION

(11) **EP 1 892 483 B1**
(45) Date of publication and mention of the grant of the patent: **08.08.2012**
(21) Application number: 07016559.2
(22) Date of filing: 23.08.2007
(51) Int. Cl.: F24F 1/00, F24F 3/16

(54) **Air conditioner and method of controlling the same**
Klimaanlage und Steuerverfahren dafür
Climatiseur et procédé de commande correspondant

(30) Priority: 25.08.2006 JP 2006228649; 25.08.2006 JP 2006228650; 31.07.2007 JP 2007198394
(43) Date of publication of application: 27.02.2008
(73) Proprietor: Sanyo Electric Co., Ltd., Moriguchi-shi, Osaka-fu (JP)
(72) Inventor: Kurokawa, Keiko, Ora-gun Gunma 370-0517 (JP); Nakata, Yuji, Ora-gun Gunma 3700536 (JP); Motegi, Masayuki, Ora-gun Gunma 370-0601 (JP); Nakahara, Shinji, Ota-shi Gunma 373-0816 (JP); Nishino, Shigetaka, Ora-gun Gunma 370-0533 (JP); Usui, Hiroaki, Ora-gun Gunma 370-0523 (JP); Uchida, Yoichi, Ashikaga-shi Tochigi 326-0006 (JP); Nishihara, Takuro, Ota-shi Gunma 373-0817 (JP)
(74) Representative: Glawe, Delfs, Moll

(56) References cited:
- EP-A2- 1 632 726
- JP-A- 2000 257 913
- JP-A- 2002 181 358
- JP-A- 2003 227 622
- JP-A- 2005 164 176

## Description

### BACKGROUND OF THE INVENTION

### 1. Field of the Invention

The present invention relates to an air conditioner that can remove microorganisms (bacteria, virus, fungus, etc. (hereinafter referred to as "virus, etc") floating in the air, and a method of controlling the air conditioner.

### 2. Description of the Related Art

There has been proposed a method of electrolyzing air such as tap water or the like containing predetermined chlorine ions to generate electrolytic water containing active oxygen species such as hypochlorous acid or the like, and air is brought into contact with the thus generated electrolytic water to in activate, decompose, remove or the like (i.e. , filter) harmful materials containing in the air, whereby air is cleaned (sterilized).

Furthermore, there has been known a technique in which filtered air is supplied to an air conditioner to heat-exchange the air from which harmful materials have been decomposed/removed, and then heat-exchanged (cooled, heated, dehumidified or the like), whereby comfortable air is supplied to a room (for example, JP-2003-250876 or JP 2002 181358, upon which the preamble of appending claim 1 is based.

In this case, in a case where the electrolytic water after filtering is received in a drain pan of a heat exchanger, and condensed water (drain) generated in the heat exchanger is pumped up and discharged by a drain pump, a part of the heat exchanger may be immersed in return water from a drain pump to the drain pan when the operation of the air conditioner is stopped, that is, the drain pump is stopped.

In this case, if the concentration of the active oxygen species or ion concentration (for example, the concentration of chlorine ions) of the electrolytic water or the like is high, there is a risk that a steel pipe constituting the heat exchanger may be corroded.

More specifically, the strength (power) order of materials which corrodes a fin, a steel pipe, etc. constituting a heat exchanger is as follows.
(1) Electrolytic water achieved by electrolyzing brine
   [the maximum concentration of chlorine ions: several hundred thousand ppm, the maximum residual chlorine concentration: 10,000ppm level]
(2) Electrolytic water when electrolytic water achieved by electrolyzing tap water is circulated
   [the maximum concentration of chlorine ions: one thousand ppm, the maximum residual chlorine concentration: several hundred ppm level]
(3) Electrolytic water of tap water
   [the maximum concentration of chlorine ions: several hundred ppm, the maximum residual chlorine concentration: several tens ppm level
(4) Tap water
   [the maximum concentration of chlorine ions: several hundred ppm, the maximum residual chlorine concentration: several ppm level
(5) Condensed water occurring under cooling operation [rare chlorine ions, no residual chlorine]

### SUMMARY OF THE INVENTION

An object of the present invention is to provide an air conditioner in which corrosion of a heat exchanger located in a drain pan can be suppressed even when the air conditioner is under a stopped state.

In order to solve the above problem, according to an aspect of the present invention, an air conditioner having a refrigerant circuit comprising a compressor, a four-way valve, an outdoor heat exchanger and an indoor heat exchanger which are successively connected to one another, the indoor heat exchanger being provided in an indoor unit is characterized by comprising: an air blowing fan for introducing air into the indoor unit and blowing out heat-exchanged air into a room; an electrolytic water supply unit for electrolyzing water containing a predetermined ion species supplied from an external water supply tank to generate electrolytic water containing active oxygen species; an air filtering unit for bringing the electrolytic water into contact with air introduced into the indoor unit by the air blowing fan to filter the air; a drain pan that is provided below the indoor heat exchanger and the air filtering unit and receiving condensed water of the indoor heat exchanger under cooling operation and the electrolytic water after the air filtering; a drain pump for discharging liquid received in the drain pan to the outside of the indoor unit; and an corrosion-resisting member formed at a part of the indoor heat exchanger which is immersed in return water from the drain pump to the drain pan at least when the drain pump is stopped.

According to the above construction, the electrolytic water supply unit generates electrolytic water containing active oxygen species by electrolyzing water containing a predetermined ion species supplied from an external supply source to generate electrolytic water containing active oxygen species.

The air filtering unit brings the electrolytic water into contact with the air introduced into the indoor unit by the air blowing fan to filter the air.

At this time, the drain pan receives the condensed water of the indoor heat exchanger under cooling operation and the electrolytic water after air filtering, and discharges the liquid received in the drain pan to the outside of the indoor unit.

When the operation is stopped, return water from the drain pump to the drain pan occurs, and a part of the indoor heat exchanger is immersed in the return water to the drain pan. However, the part of the indoor heat exchanger which is immersed in the return water is formed of the corrosion-resisting member, so that the corrosion of the indoor heat exchanger by the electrolytic water can be suppressed.

In this case, the corrosion-resisting member may be formed at not only the part of the indoor heat exchanger which is immersed in the return water, but also a fin and a refrigerant pipe constituting the indoor heat exchanger at the surrounding portion of the part of the indoor heat exchanger.

According to the above construction, the corrosion of the indoor heat exchanger by the electrolytic water can be more surely suppressed.

Furthermore, the corrosion-resisting member may be formed of hydrophilic material.

According to the above construction, the corrosion can be suppressed without disturbing the hydrophilic property of the fin and the refrigerant pipe constituting the indoor heat exchanger by the corrosion-resisting member.

Still furthermore, the corrosion-resisting member may be formed by coating of inorganic paint of liquid glass or room-temperature glass coating.

Still furthermore, the ion species may be halide ions.

In the above construction, the active oxygen species preferably contains at least one material selected from the group consisting of hypochlorous acid, ozone and hydrogen peroxide.

According to the above construction, by utilizing chlorine ions (chloride ions) or the like contained in tap water or the like, the above active oxygen species can be easily generated together with electrolytic water without particularly introducing any chemical compound or the like when tap water or the like is electrolyzed.

### BRIEF DESCRIPTION OF THE DRAWINGS

Fig. 1 is a diagram showing the schematic construction of an air conditioner and an air conditioning system according to a first embodiment of the present invention;
Fig. 2 is a cross-sectional view showing a setting state of an indoor unit according to the first embodiment;
Fig. 3 is a plan view of the indoor unit of the first embodiment when it is viewed from the ceiling side;
Fig. 4 is an exploded perspective view of the indoor unit of the first embodiment;
Fig. 5 is a diagram showing the arrangement of a drain pan and an indoor heat exchanger according to the first embodiment;
Fig. 6 is a perspective view showing the outlook of an air filtering unit installed in the air conditioner according to the first embodiment;
Fig. 7 is a diagram showing the construction of an electrolytic unit;
Fig. 8 is a plan view of an indoor unit according to the second embodiment when it is viewed from the ceiling side;
Fig. 9 is a perspective view showing the exploded state of a drain pan and the indoor unit according to the second embodiment;
Fig. 10 is a cross-sectional view taken along A-A of Fig. 8;
Fig. 11 is a diagram showing the construction of an air conditioner and an air conditioning system according to a third embodiment of the present invention;
Fig. 12 is a cross-sectional view showing a setting state of an indoor unit according to the third embodiment;
Fig. 13 is a plan view showing the indoor unit according to the third embodiment when it is viewed from the ceiling side;
Fig. 14 is an exploded perspective view showing the indoor unit according to the third embodiment; and
Fig. 15 is a flow chart showing the processing when the operation of the air conditioner according to the third embodiment is stopped.

### DETAILED DESCRIPTION OF THE PREFERRED EMBODIMENTS

Preferred embodiments according to the present invention will be described hereunder with reference to the accompanying drawings.

### [1] First Embodiment

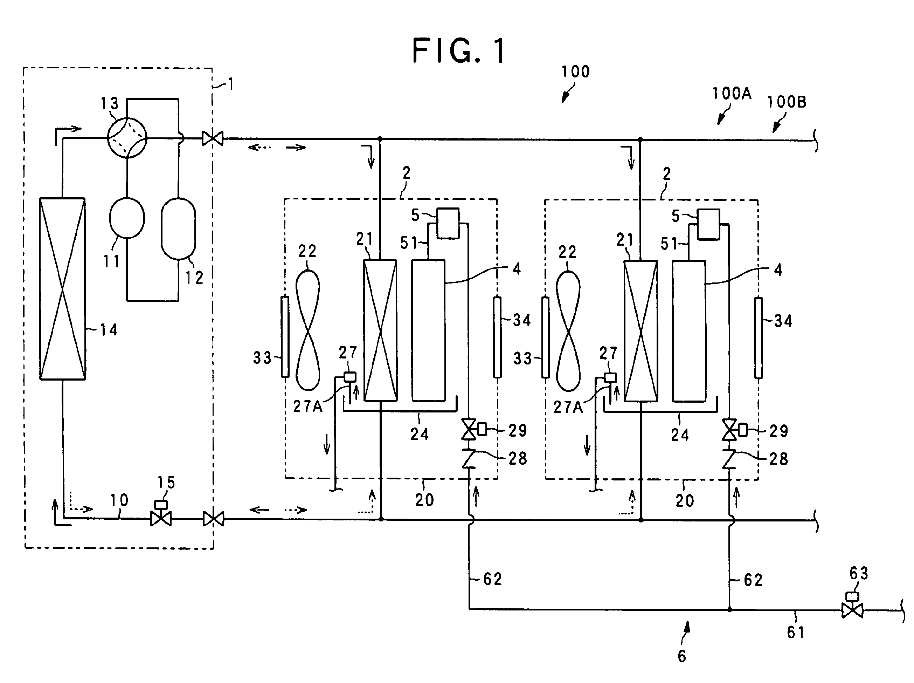

Fig. 1 is a diagram showing the construction of an air conditioning system as an air conditioner according to the first embodiment.

An air conditioning system 100 is equipped with a so-called multi-type air conditioning unit 100A in which plural indoor units 2 are connected to one outdoor unit 1. In the outdoor unit 1, a compressor 11 is disposed in a refrigerant pipe 10, an accumulator is connected to the suction side of the compressor 11, and a four-way valve 13, an outdoor heat exchanger 14 and an electrically-driven expansion valve 15 are connected to the discharge side of the compressor 1 in this order as shown in Fig. 1 . Byswitching the four-way valve 13, refrigerant flows in a direction indicated by an broken-line arrow under cooling operation, and also refrigerant flows in a direction indicated by a solid-line arrow under heating operation, whereby the cooling operation and the heating operation are switched to each other.

The indoor unit 2 is connected to the outdoor unit 1 through the refrigerant pipe 10. In the housing 20 of the indoor unit 2 are disposed an indoor heat exchanger 21, an air blowing fan 22 for introducing air through an air suction port 33 into the indoor unit 2 and blowing out air heat-exchanged in the indoor heat exchanger 21 through an air blow-out port 34 into a room, an air filtering unit 4 for bringing electrolytic water containing active oxygen species into contact with the air which is introduced into the indoor unit 2 by the air blowing fan 22, thereby filtering the air, and an electrolytic unit 5 for electrolyzing water containing a predetermined ion species to generate electrolytic water containing active oxygen species, and supplying the electrolytic water to the air filtering unit 4 as shown in Fig. 1.

A drain pan 24 for receiving condensed water generated in the indoor heat exchanger under cooling operation and electrolytic water after air filtering is carried out is provided below the indoor heat exchanger 21 and the air filtering unit 4.

The electrolytic unit is connected to the water supply source through a water distributing pipe 6.

The water supply source is not limited to a specific one insofar as it can supply water to the electrolytic unit 5. More specifically, the water distributing pipe 6 may be connected to a tap water pipe (not shown) to use tap water as the water supply source. Furthermore, the water distributing pipe 6 may be connected to a water supply tank (not shown) for stocking water to use the water supply tank as the water supply source. Here, the water stocked in the water supply tank may be water containing a predetermined ion species having sterilization power such as chloride ions or the like such as tap water in advance, or water having a low concentration of ion species such as well water or the like to which a predetermined ion species having sterilization power such as chloride ions or the like is added. In the following description, these kinds of water supplied from the water supply source through the water distributing pipe 6 to the electrolytic unit 5 will be referred to as "tap water or the like (or electrolytic target water)".

The water distributing pipe 6 is equipped with a common (shared) pipe 61 connected to the water supply source, and distributing pipes 62 which are branched from the common pipe 61 to each indoor unit 2 to supply tap water or the like to the electrolytic unit 5.

The common pipe 61 is provided with an electromagnetic valve 63.

Each indoor unit 2 is provided with a check valve 28 and an electrically-driven valve 29 between the electrolytic unit 5 and the distributing pipe 62 when viewed from the distributing pipe 62 side. In this case, the electrolytic target water (tap water or the like) is supplied to the electrolytic unit 5 while the amount of the electrolytic target water is adjusted by opening/closing the electromagnetic valve 63 and adjusting the opening degree of the electrically-driven valve 29. The check valve 28 serves to prevent the electrolytic target water from flowing back.

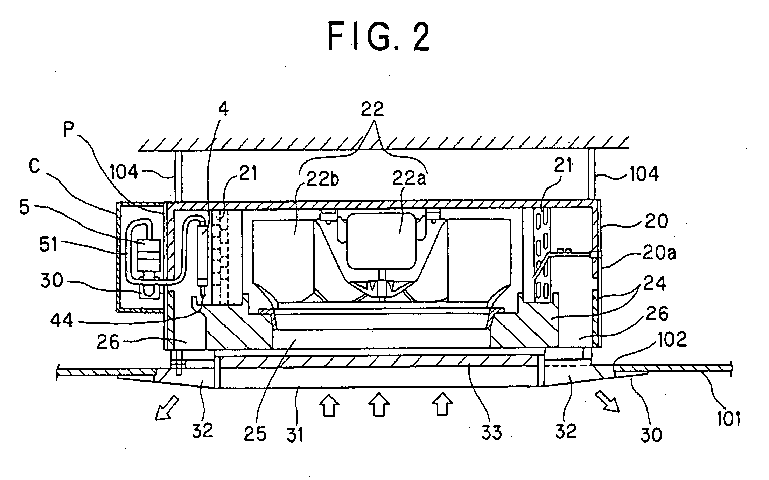

Next, the specific construction of the indoor unit 2 will be described with reference to Figs. 2 to 4.

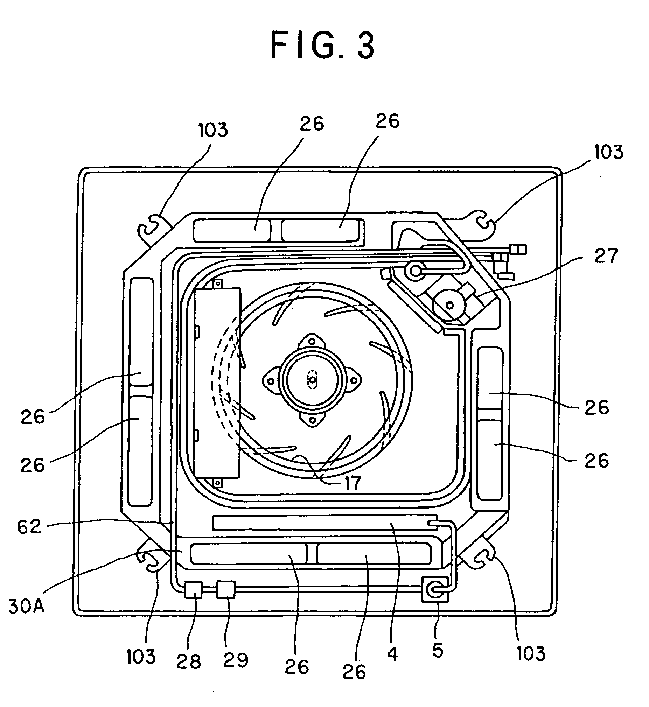

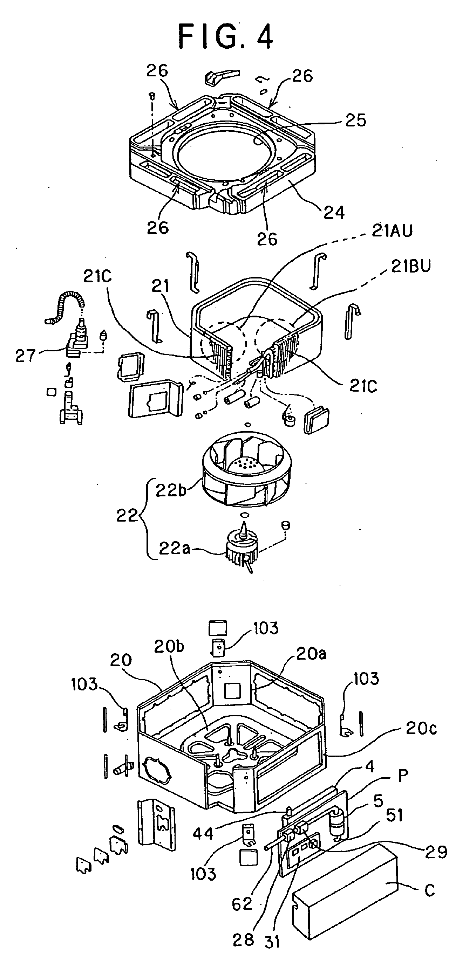

Fig. 2 is a cross-sectional view showing a setting state of the indoor unit, Fig. 3 is a plan view when the indoor unit is viewed from the ceiling side, and Fig. 4 is an exploded perspective view of the indoor unit.

As shown in Figs. 2 and 3, the indoor unit 2 of this embodiment is a so-called in-ceiling embedded and four-way blow-out type indoor unit 2, and the housing 20 of the indoor unit 2 is embedded in a substantially rectangular hole formed in the ceiling of a building.

As shown in Figs. 3 and 4, the housing 20 is designed to have a substantially rectangular box-shape having an open lower surface thereof (the upper side in Fig. 4). Suspending tags 103 are provided at the four corners of the housing 20, and fixed to suspending bolts 104 suspended from the back side of the ceiling, whereby the housing 20 is suspended in the ceiling space.

A face panel 32 designed in a substantially square shape in plan view is provided to the lower surface of the housing 20, and the ceiling hole 102 is covered by the face panel 32. An air suction port 33 for sucking indoor air into the housing 20 is provided substantially at the center of the face panel 3 in plan view. A filter 35 is mounted inside the air suction port 33, that is, at the back side of the ceiling 101. Furthermore, air blow-out ports 34 are formed at the four sides of the face panel 32 so as to be elongated along the respective sides, and air is blown out in the four directions from the four air-blow ports 34 to the room.

Furthermore, as shown in Fig. 4, the electrolytic unit 5, a check valve 28, an electrically-driven valve 29, a change-over valve 30 and a control board 31 described later are arranged on a setting panel P, and this panel P is disposed in an opening 20c provided in each side surface of the housing 20 while all the elements are covered by a cover C.

Next, the internal construction of the housing 20 will be described.

A thermal insulating member 23 formed of foamed polystyrene is provided to the inner surface of the side plate 20a of the housing 20. A motor 22a is fixed to the inside 20b of the top plate, and a vane wheel 22b is secured to the shaft of the motor 22a. These elements constitute the air blowing fan 22. An indoor heat exchanger 21 which is bent in a substantially rectangular shape along the side plate 20a of the housing 20 is disposed inside the thermal insulating member of foamed polystyrene so as to surround the air blowing fan 22 (see Fig. 3). Air sucked from the air suction port 33 by the air blowing fan 22 is supplied to the indoor heat exchanger 21 to be heat-exchanged, and the air heat-exchanged in the indoor heat exchanger 21 is blown out from each air blow-out port 34.

Furthermore, as shown in Figs. 2 to 4, a drain pan 24 formed of foamed polystyrene is disposed below the indoor heat exchanger 21. The drain pan 24 is disposed in the housing 20 while the outer peripheral surface thereof is disposed substantially in contact with the inner surface of the housing 20. An air suction opening and air blow-out openings 26 are formed in the drain pan 24 so as to be located at the positions corresponding to the air suction port 33 and the air blow-out ports 34 of the face panel 32. As shown in Fig. 4, the air suction opening 25 is formed in a substantially circular shape in plan view at the center of the drain pan 24 which is substantially rectangular. The air blow-out openings 26 are formed along the four sides of the drain pan 24.

A drain pump 27 is disposed at the position corresponding to one corner of the indoor heat exchanger 21, and drain (drain water) stocked in the drain pan 24 is pumped up through the suction port of a suction pipe 27A (see Fig. 1) by the drain pump 27 (see Fig. 3), and discharged to the outside of the indoor unit 2.

Here, the detailed arrangement and detailed construction of the indoor heat exchanger 21 will be described.

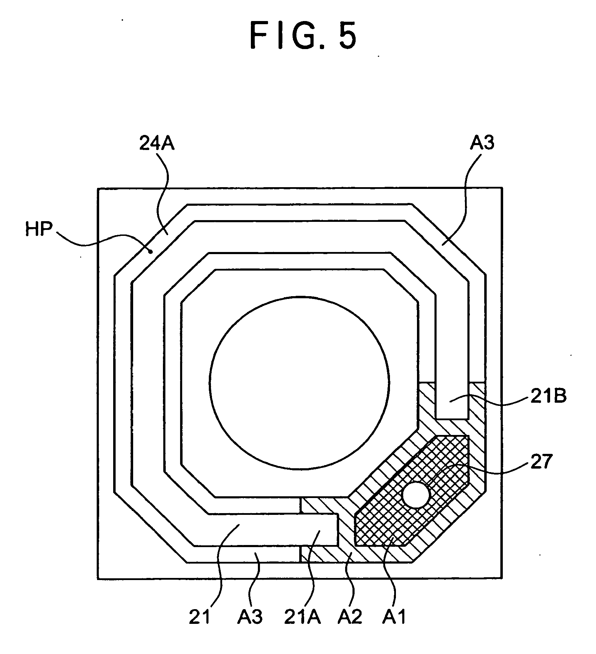

Fig. 5 is a diagram showing the arrangement of the drain pan and the indoor heat exchanger.

As described above, the drain pan 24 of foamed polystyrene is disposed below the indoor heat exchanger 21. A drain water receiving portion 24A of the drain pan 24 is designed so that the lowermost stream side thereof corresponds to the drain pump 27 side thereof and the uppermost stream side HP corresponds to a position on the substantially diagonal line of the drain pan 24 with respect to the lowermost stream side thereof.

Accordingly, drain water flows from the position HP to the suction pipe 27A side of the drain pump 27, that is, from an area A3 to an area A2 (hatched area in Fig. 5), an area A1 (meshed area in Fig. 5) along the shape of the indoor heat exchanger 21.

Under the state that the drain pump 27 is operated, drain water is merely stocked in the area A1, and thus a fin or steel pipe constituting the indoor heat exchanger 21 is not immersed in the drain water.

However, Under the state that the drain pump 27 is stopped, electrolytic water after air filtering (hereinafter referred to as post-filtering electrolytic water) in the drain pump 27 or the like is returned into the drain pan 24 as return water, and thus drain water is stocked in both the areas A1 and A2. Therefore, the lower portions of both the end portions of the indoor heat exchanger 21, that is, the portions indicated by broken-line circles 21AU and 21BU in Fig. 4 (these portions will be hereinafter referred to as "corrosion-promoted portions) are immersed in drain water containing post-filtering electrolytic water, etc. If this state is left with no countermeasure, these portions would be corroded.

Therefore, according to this embodiment, hydrophilic material is formed as an corrosion-resisting member 21C on the surfaces of these corrosion-promoted portions indicated by the broken-line circles 21AU and 21BU and further portions of the indoor heat exchanger 21 which are located in the neighborhood of the corrosion-promoted portions.

The formation of the corrosion-resisting member 21C is performed by coating inorganic paint of liquid glass or coating room-temperature glass and then drying the room-temperature glass. As a result, liquid having a high chlorine ion concentration or residual chlorine concentration such as post-filtering electrolytic water is prevented from directly touching the fin or steel pipe (copper pipe) constituting the indoor heat exchanger 21, so that the corrosion-resisting performance can be enhanced without disturbing hydrophilic property.

Furthermore, the air filtering unit 4 is disposed at the outside of one side of the indoor heat exchanger 21 which is bent in a rectangular shape. In this embodiment, the air filtering unit 4 is disposed at the side corresponding to the end portion of the indoor heat exchanger 21 and the thermal insulating member 23. Accordingly, air filtered in the air filtering unit is blown out from one air blow-out port 34 formed in the face panel 32.

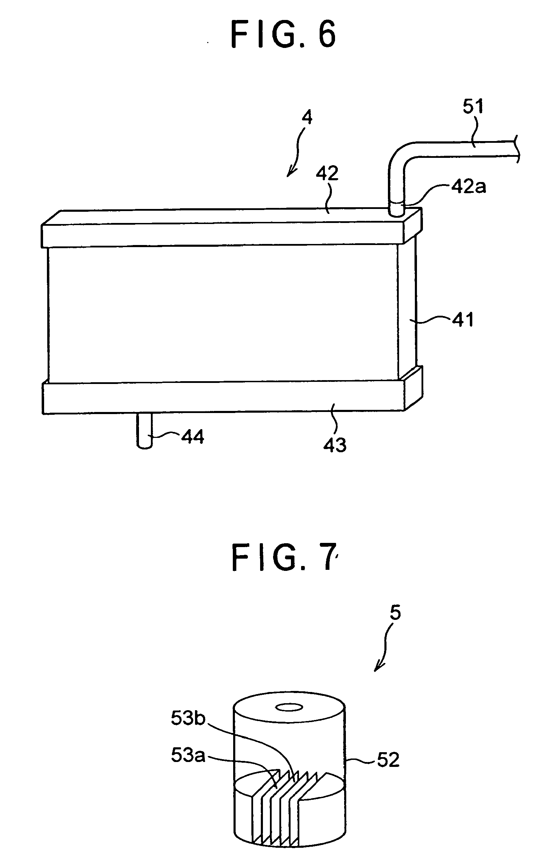

Fig. 6 is a perspective view showing the air filtering unit.

As shown in Fig. 6, the air filtering unit 4 is equipped with a gas-liquid contact member having high water retentivity, a water dispersing tray 42 disposed above the gas-liquid contact member 41, and a water receiving tray 43 disposed below the gas-liquid contact member 41. The gas-liquid contact member 41 is formed of non-woven cloth formed of acrylic fiber, polyester fiber or the like. A raw material having little reactivity to electrolytic water is preferably used as the raw material of the gas-liquid contact member 41, and further not only the above acrylic fiber, the polyester fiber, etc. , but also other materials such as polyolefin-based resin (polyethylene resin, polypropylene resin or the like), vinyl chloride resin, fluorinated rein (PTFE, PFA, ETFE or the like), cellulose-basedmaterial, ceramics-basedmaterial, etc. may be used.

The gas-liquid contact member 41 may be subjected to a hydrophilic treatment or the like to enhance the affinity of the gas-liquid contact member 41 to electrolytic water. Accordingly, the water retentivity (wettability) of the gas-liquid contact member 41 to electrolytic water is kept, and the air introduced to the gas-liquid contact member 41 can be surely brought into contact with electrolytic water for a long time.

The water dispersing tray 42 has a connection port 42a formed in the side surface thereof, and an electrolytic water supply pipe 51 is connected to the connection port 42a. Many holes (not shown) are formed in the bottom surface of the water dispersing tray 42, and electrolytic water supplied through the electrolytic water supply pipe 51 is dropped and dispersed to the gas-liquid contact member 41 through the holes concerned.

The water receiving tray 43 can hold the gas-liquid contact member 41 from the lower side thereof, and stock electrolytic water passing through the gas-liquid contact member 41. A drain pipe 44 for guiding electrolytic water to the drain pan 24 (see Figs. 2 and 4) is connected to the bottom surface of the water receiving tray 43.

Fig. 7 is a diagram showing the construction of the electrolytic unit. As shown in Fig. 7, the electrolytic unit 5 for supplying electrolytic water to the gas-liquid contact member 41 is equipped with an electrolytic bath 52 and at least a pair of electrodes 53a and 53b. When current is supplied to the electrodes 53a and 53b, the electrodes 53a, 53b electrolyze tap water or the like which is supplied through the water distributing pipe 6 to the electrolytic bath 52 and contains or is added with a predetermined ion species, thereby generating electrolytic water containing active oxygen species.

Here, the active oxygen species means oxygen molecules having higher oxidizing activity than normal oxygen and also related substance thereof, and contain not only so-called narrowly-defined active oxygen such as superoxide anion, singlet oxygen, hydroxyl radical and hydrogen peroxide, but also so-called broadly-defined active oxygen such as ozone, hypohalous acid (hypochlorous acid, etc.), etc.

The electrolytic bath 52 is disposed in proximity to the gas-liquid contact member 41, and thus the electrolytic water containing active oxygen species can be immediately supplied through the electrolytic water supply pipe 51 to the gas-liquid contact member 41.

The electrodes 53a, 53b are two electrode plates each of which is constructed by a base of titan (Ti) and a coating layer of iridium (Ir), platinum (Pt), for example.

By making current flow through tap water or the like with the electrodes 53a, 53b, at the cathode, the following reaction occurs:

4H⁺ + 4e⁻ + (4OH⁻) → 2H₂ + (4OH⁻)

At the anode, the following reaction occurs:

2H₂O → 4H⁺ + O₂ + 4e⁻

At the same time, chloride ions originally contained in tap water or the like or chloride ions or the like added by an ion species adding unit 7 react as follows:

2Cl⁻ → Cl₂ + 2e⁻

Furthermore, Cl₂ reacts with water:

Cl₂ + H₂O → HClO + HCl

In this construction, hypochlorous acid (HCLO)having strong sterilization power or the like is generated by supplying current between the electrodes 53a, 53b, and electrolytic water containing this active oxygen species such as hypochlorous acid or the like is supplied to the gas-liquid contact member 41. By passing air through the gas-liquid contact member 41 supplied with the electrolytic water concerned, virus, etc. floating in the air passing through the gas-liquid contact member 41 concerned are inactivated and thus the air can be filtered. In addition, breeding of various bacterial, fungus, etc. in the gas-liquid contact member 41 itself can be prevented.

Gaseous materials which are causative agents of odor, etc. in the air are dissolved in the electrolytic water or react with active oxygen species such as hypochlorous acid or the like contained in the electrolytic water, whereby these materials are removed from the air when passing through the gas-liquid contact member 41, so that the air can be also deodorized by the gas-liquid contact member 41.

Furthermore, when current having a predetermined current density (for example, 20mA/cm² or the like) is supplied between the electrodes 53a, 53b, a predetermined amount of tap water or the like is electrolyzed, and electrolytic water containing active oxygen species having a predetermined concentration (for example, free residual chlorine concentration of 1mg/l or the like) can be generated.

Next, the operation of the air conditioner according to this embodiment will be described.

When an operation start instruction is input from an indoor remote controller (not shown) or the like by a user, a controller 74 switches the four-way valve 13 of the outdoor unit 1 to a cooling side or a heating side according to the operation mode indicated on the basis of the operation start instruction, and carries out predetermined air conditioning operation such as cooling operation, heating operation or the like.

Here, when the cooling operation is carried out, the controller 74 switches the four-way valve 13 to the cooling side to make refrigerant flow into the refrigerant circuit 100B as indicated by a broken-line arrow in Fig. 1, whereby the outdoor heat exchanger 14 functions as a condenser and the indoor heat exchanger 21 functions as an evaporator. In the indoor unit 2, the air blowing fan 22 is operated to suck indoor air from the air suction port 33, heat-exchange the air in the indoor heat exchanger 21 and then supply the cooled air to the air filtering unit 4.

When the heating operation is carried out, the controller 74 switches the four-way valve 13 to the heating side to make refrigerant flow into the refrigerant circuit 100B, whereby the outdoor heat exchanger 14 functions as an evaporator and the indoor heat exchanger 21 functions as a condenser. Then, in the indoor unit 2, the air blowing fan is operated to suck indoor air from the air suction port 33, heat-exchange the air in the indoor heat exchanger 21 and supply the heated air to the air filtering unit 4.

As described above, at the same time when the air conditioning operation is carried out, tap water or the like added with a predetermined amount of ion species is electrolyzed in the electrolytic unit 5 to generate electrolytic water containing a predetermined active oxygen species such as hypochlorous acid or the like. The generated electrolytic water is supplied to the air filtering unit 4. In the air filtering unit 4, air supplied to the gas-liquid contact member 41 is brought into contact with electrolytic water containing active oxygen species and filtered. Here, "filtering" of airmeans that various virus, bacteria, fungus, etc. floating in the air are inactivated, sterilized, decomposed, removed or the like.

According to the first embodiment, the air introduced into the indoor unit 2 by the air blowing fan 22 is heat-exchanged in the indoor heat exchanger 21 and then blown into the room. Furthermore, the air introduced into the indoor unit 2 by the air blowing fan 22 is supplied to the air filtering unit 4 to be brought into contact with electrolytic water containing active oxygen species, thereby filtering the air. The air filtering unit 4 is supplied with electrolytic water containing active oxygen species generated in the electrolytic unit 5. The electrolytic unit 5 is connected through the water distributing pipe 6 to a water supply source such as a tap water pipe, a water supply tank or the like, and supplied with water such as tap water, well water, pure water, purified water or the like from the water supply source. Furthermore, the water distributing pipe 6 may be provided with an ion species supplying unit for adding a predetermined ion species to water supplied from the water supply source as occasion demands. Therefore, water containing ion species is supplied to the electrolytic unit 5 irrespective of the concentration of the ion species of water supplied from the water supply source, so that electrolytic water can be efficiently generated and thus air can be efficiently filtered.

For example, when influenza virus invades into indoor air, the active oxygen species functions to break down and vanish (remove) the surface protein (spike) of the virus concerned which is indispensable for infection. When the surface protein of influenza virus is broken down, the influenza virus is not joined to a receptor which is necessary for infection of the virus concerned, so that infection can be prevented. As a result of a verification test which was made in cooperation with Sanitary Environment Research, it has been found that when air in which influenza virus invades is passed through the gas-liquid contact member 31 of this embodiment, 99% or more of the virus concerned can be removed.

Next, the operation when the drain pump is stopped (the operation of the air conditioner is stopped) will be described.

First, the controller (not shown) on the control board 31 cooperates with the controller (not shown) of the indoor unit 2 to stop the drain pump 27 when the operation stop instruction is made, and notifies this fact to the controller of the indoor unit 2, so that the indoor unit 2 is set to an operation stop state.

In connection with this operation, post-filtering electrolytic water, etc. in the drain pump 27 return as return water into the drain pan 24 by gravitational force, and drain water is stocked in the area A1 and the area A2. Therefore, the corrosion-promoted portions indicated by the broken-line circles 21AU and 21BU of the indoor heat exchanger 21 are immersed in the drain water containing the post-filtering electrolytic water, etc. However, the corrosion-resisting member 21C is formed on these portions, so that liquid having high chlorine-ion concentration or high residual chlorine concentrationsuchasthepost-filteringelectrolyticwater, etc. is prevented from being brought into direct contact with the fin, the steep pipe (copper pipe) , etc. constituting the indoor heat exchanger 21.

Accordingly, even a part of the indoor heat exchanger 21 is immersed in the return water from the drain pump to the drain pan, the indoor heat exchanger 21 can be suppressed from being corroded. Furthermore, the corrosion-resisting performance of the indoor heat exchanger 21 can be enhanced over a long term, and it is not necessary to exchange parts, so that the maintenance performance can be enhanced.

Furthermore, as in the case of the air conditioning system 100 of this embodiment, an air flowing passage is formed so as to extend from the air suction port 33 to the air blow-out ports 34 by the air blowing fan 22, and the air filtering unit 4 is disposed at the downstream side of the indoor heat exchanger 21 on the air flowing passage, whereby the following effect can be achieved.

When the cooling operation is carried out in the air conditioning system 100 of this embodiment, air which is cooled in the indoor heat exchanger 21 and thus higher in relative humidity is supplied to the air filtering unit 4.

When the heating operation is carried out in the air conditioning system 100, air which is heated in the indoor heat exchanger 21 and thus lower in relative humidity is supplied to the air filtering unit 4. Accordingly, even when air supplied to the air filtering unit 4 is brought into contact with electrolytic water, the relative humidity of the air after air filtering can be suppressed from increasing because air which has been already higher in relatively humidity is supplied to the air filtering unit 4 under cooling operation. On the other hand, under heating operation, air having low relative humidity is supplied to the air filtering unit 4. Therefore, when the air is brought into contact with electrolytic water in the air filtering unit 4, the relative humidity of the air after air filtering can be increased. Accordingly, the humidification amount under the air conditioning operation can be automatically controlled without increasing the air conditioning load by merely filtering/cleaning air in a wet style and switching the four-way valve 13 to switch the operation between the cooling operation and the heating operation, whereby the air environment of the room can be kept comfortable.

Furthermore, under cooling operation, heat-exchanged air is filtered in the air filtering unit 4, and clean air can be supplied to the room. In addition, the relative humidity of air to be supplied to the air filtering unit 4 is high, and thus the consumption of electrolytic water can be suppressed.

In the foregoing description, the corrosion-resisting member 21C is formed at the corrosion-promoted portions of the indoor heat exchanger 21 immersed in drain water containing post-filteringelectrolytic water,etc.and other portions of the indoor heat exchanger 21 in the neighborhood of the corrosion-promoted portions. However, a larger part of the indoor heat exchanger 21 which contains these portions, or the whole of the indoor heat exchanger 21 may be provided with the corrosion-resisting member 21C.

### [2] Second Embodiment

In the first embodiment, the hydrophilic material as the corrosion-resisting member 21C is formed at only the corrosion-promoted portions and neighboring portions of the indoor heat exchanger 21 indicated by the broken-line circles 21AU and 21BU . However, according to the second embodiment, when the indoor heat exchanger is actually installed, the corrosion-resisting member is formed on the surface of the portion of the indoor heat exchanger which is accommodated in the drain pan.

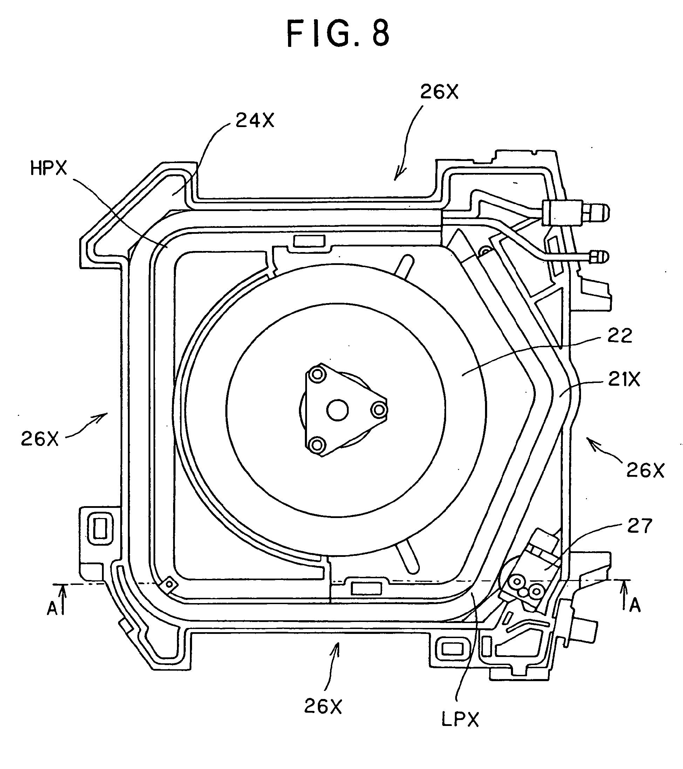

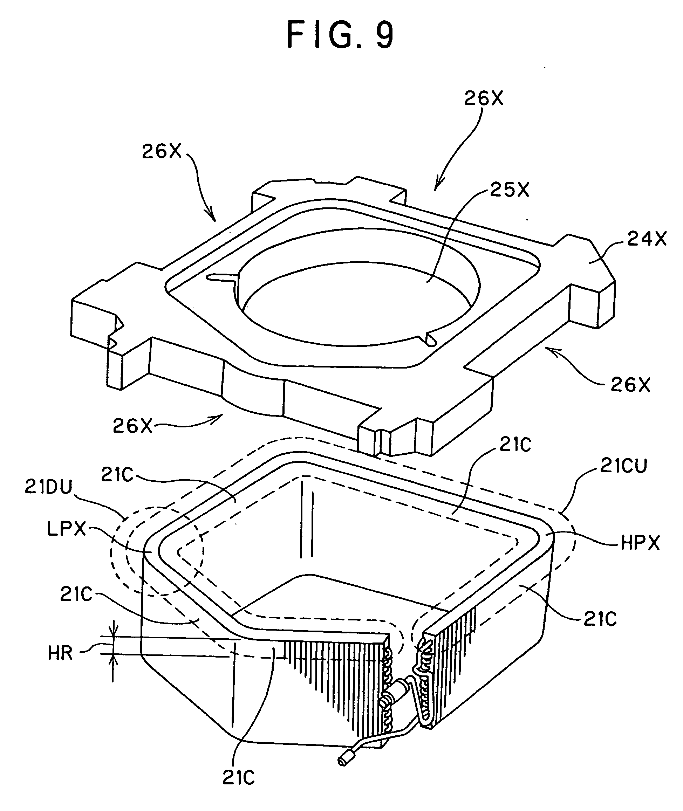

Fig. 8 is a plan view showing the indoor unit when it is viewed from the ceiling side. In Fig. 8, the same elements as Fig. 3 are represented by the same reference numerals. Fig. 9 is a perspective view showing an exploded state of the drain pan and the indoor unit.

A drain pan 24X formed of foamed polystyrene is disposed below an indoor heat exchanger 21X. The drain pan 24X is disposed in the housing so that a predetermined outer peripheral surface thereof is in contact with the inner surface of the housing (not shown), and an air suction opening 25X and air blow-out cut-out portions 26X are provided to the drain pan 24X so as to be located at the positions corresponding to an air suction port and air blow-out ports of a face panel (not shown). As shown in Fig. 9, the air suction opening 25X is formed in a substantially circular shape in plan view at the center of the substantially rectangular drain pan 24. The air blow-out opening cut-out portions 26X are formed along the four sides of the drain pan 24X. Furthermore, the indoor heat exchanger 21X which is bent in a substantially pentagonal shape (a shape like a home base) is disposed along the side plate of the housing.

The indoor heat exchanger 21X is supplied with air sucked from the air suction port by the air blowing fan 22, and air heat-exchanged in the indoor heat exchanger 21X is blown out from the respective air blow-out ports through the air blow-out opening cut-out portions 26X to the room.

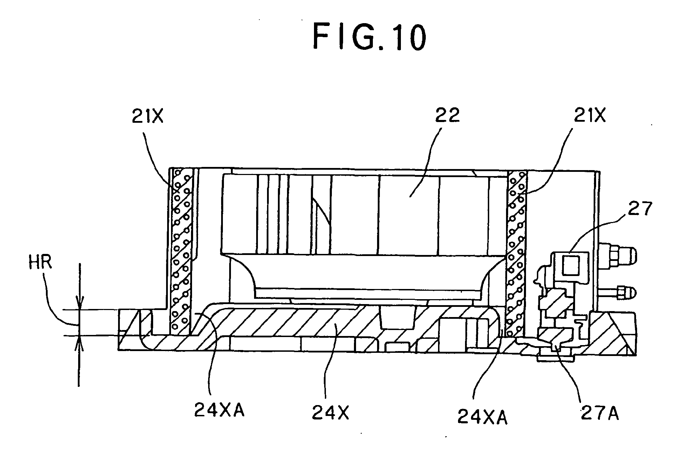

A drain pump 27 is disposed at the position corresponding to one corner of the indoor heat exchanger 21X. Drain water stocked in the drain pan 24X is pumped up by the suction pipe 27A (see Fig. 10) of the drain pump 27 and discharged to the outside of the indoor unit.

Here, the detailed arrangement and construction of the indoor heat exchanger 21 will be described.

Fig. 10 is an A-A cross-sectional view of Fig. 8.

As described above, the drain pan 24X formed of foamed polystyrene is disposed below the indoor heat exchanger 21X. The drain water receiving portion 24XA of the drain pan 24X is designed so that the lowermost stream side thereof corresponds to the drain pump 27 side thereof and the uppermost stream side HPX corresponds to a position on the substantially diagonal line of the drain pan 24X with respect to the lowermost stream side thereof.

Accordingly, when the indoor unit is set in horizontal position as indicated by the specification, the drain water flows along the shape of the indoor heat exchanger 21X from the position HPX to the position LPX at the suction pipe 27A side of the drain pump 27.

Under the state that the drain pump 27 is operated, the drain water is merely stocked in an area in the neighborhood of the suction pipe 27A of the drain pump 27, and thus a fin or a steel pipe constituting the indoor heat exchanger 21X is not immersed in the drain water. However, the actual indoor unit is not set in horizontal position as indicated by the specification, and thus drain water stays not only at the area in the neighborhood of the suction pipe 27A of the drain pump 27, but also at any place of the drain water receiving portion 24XA.

That is, not only when the drain pump 27 is stopped, but also when the drain pump 27 is operated, drain water may be stocked at any position in the drain water receiving portion 24XA of the drain pan 24X.

That is, with respect to the indoor heat exchanger 21X, not only the portion indicated by a broken-line circle 21DU, but also any portion of a broken-line area 21CU as shown in Fig. 9 may be immersed in drain water containing post-filtering electrolytic water or the like.

Therefore, according to the second embodiment, the hydrophilic material as the corrosion-resisting member 21C is formed on the surface of the portion of the indoor heat exchanger 21X which is indicated by the broken-line area 21CU. In this case, the coating area of the corrosion-resisting member 21C in the indoor heat exchanger 21X is determined by the following manner. That is, as shown in Fig. 10, when the maximum amount of drain water is fully stocked in the drain pan 24X until it reaches the upper edge of the drain pan 24X. The water depth of the drain water at this time is represented by the height HR. Accordingly, the coating area of the corrosion-resisting member 21C is defined by the height HR. In this case, the heat-exchange efficiency (effectiveness)-of the indoor heat exchanger 21X is lowered due to the coating of the corrosion-resisting member 21C, and thus if the heat-exchange efficiency is set to 100% when no corrosion-resisting member 21C is coated on the heat exchanger, it is desirable that the heat-exchange efficiency of about 95% or more can be kept.

As in the case of the first embodiment, the corrosion-resisting member 21C may be formed by coating and drying inorganic paint of liquid glass or by coating and drying room-temperature glass.

As a result, liquid having a higher chlorine ion concentration or higher residual chlorine concentration such as post-filtering electrolytic water or the like can be prevented from directly touching the fin or steel pipe (copper pipe) located in the drain pan 24X out of the indoor heat exchanger 21X, so that the corrosion-resisting performance can be enhanced without disturbing hydrophilicity.

Accordingly, according to the second embodiment, even when a part of the indoor heat exchanger 21 is immersed in return water from the drain pump 27 to the drain pan 24X or drain water which is stocked in the drain pan 24X and thus does not discharged to the outside, the corrosion of the indoor heat exchanger 21X can be suppressed, and the corrosion-resisting performance of the indoor heat exchanger 21X can be enhanced over a long term. Accordingly, it is unnecessary to exchange parts, and the maintenance performance can be enhanced.

### [3] Third Embodiment

Next, a third embodiment according to the present invention will be described.

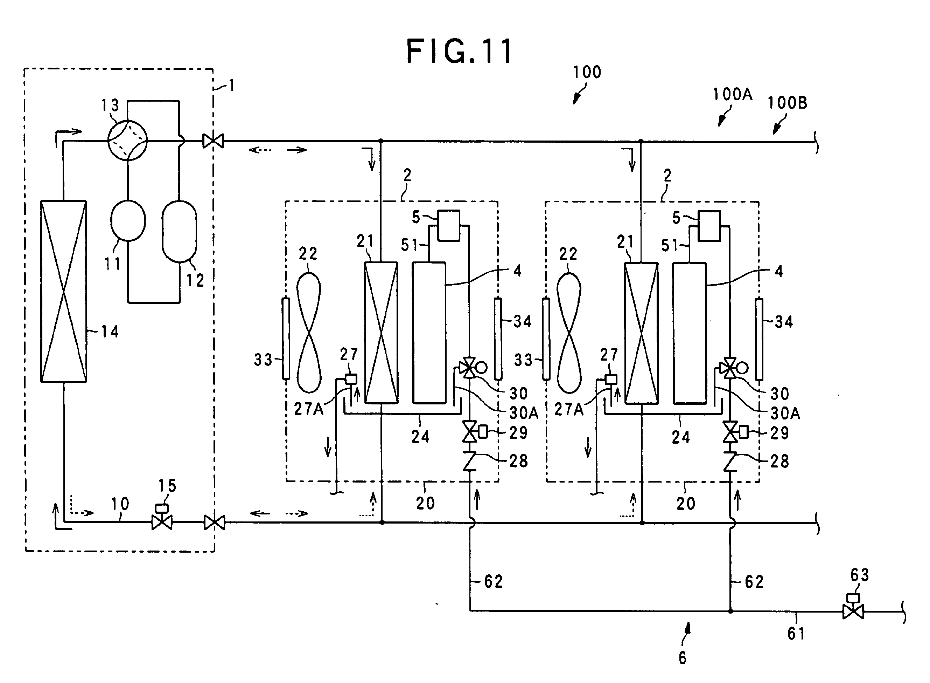

Fig. 11 is a diagram showing the construction of an air conditioning system 100X as an air conditioner according to a third embodiment. In Fig. 11, the same elements as the first embodiment of Fig. 1 are represented by the same reference numerals, and the detailed description thereof is omitted.

The different point of the air conditioning system 100X from the air conditioning system 100 of the first embodiment resides in that a change-over valve 30 is provided at the downstream side of the electrically-driven valve 29 between the electrolytic unit 5 of each indoor unit 2 and each distributing pipe 62. The change-over valve 30 switches the electrolytic unit 5 and the drain pan 24 therebetween as a supply destination of the electrolytic target water. This switching is carried out when an operation stop instruction described later is output, and aims to prevent electrolytic water having a high ion concentration frombeing trapped in the drain pan 24.

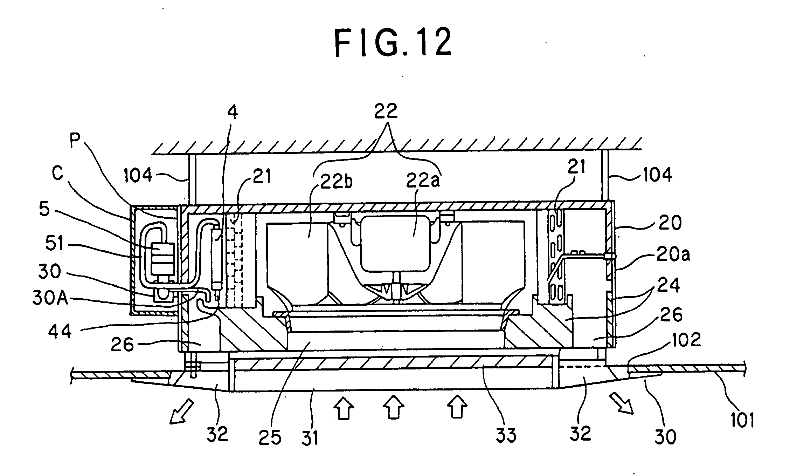

Next, the specific construction of the indoor unit 2 will be described with reference to Figs. 12 to 14.

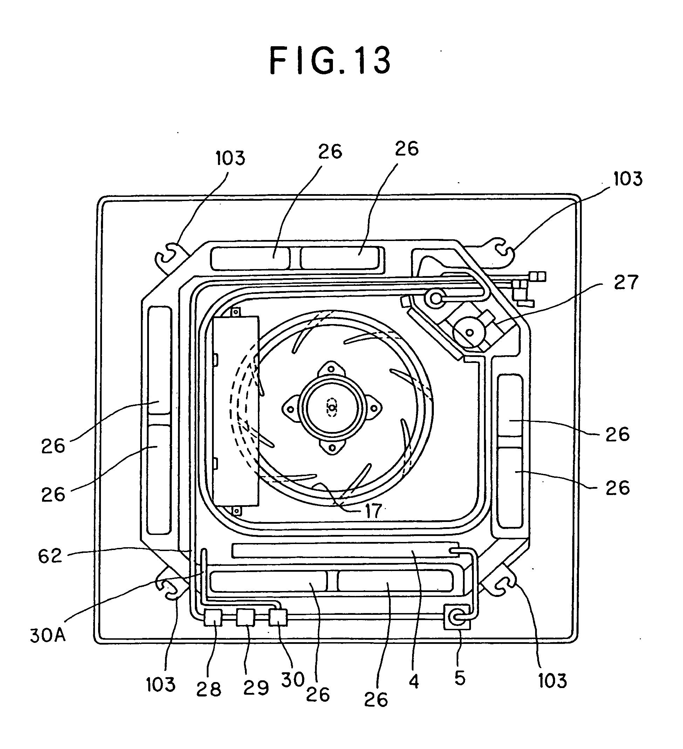

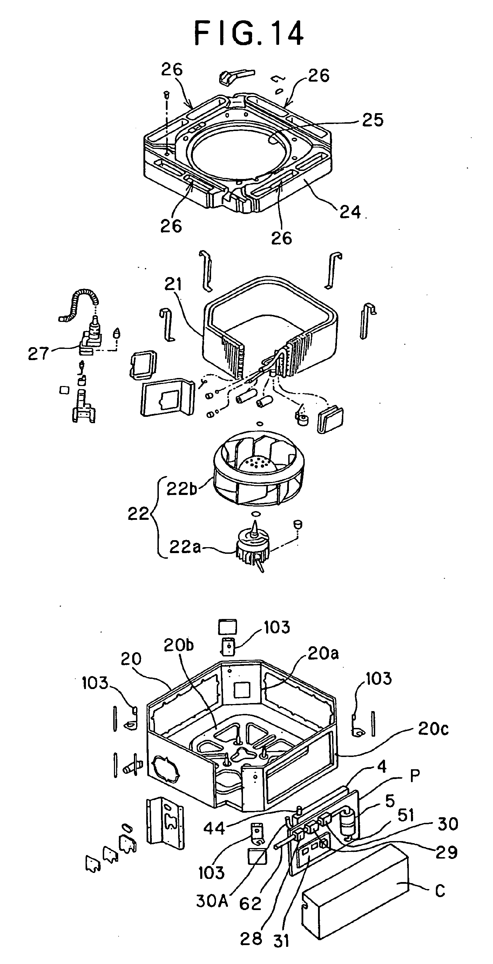

Fig. 12 is a cross-sectional view showing a setting state of the indoor unit, Fig. 13 is a plan view of the indoor unit when it is viewed from the ceiling side, and Fig. 14 is an exploded perspective view of the indoor unit.

As shown in Figs. 12 and 13, the indoor unit 2 of this embodiment is a so-called in-ceiling embedded and four-way blow-out type indoor unit 2, and the housing 20 of the indoor unit 2 is embedded in a ceiling hole 102 which is formed in a substantially rectangular shape in the ceiling 101 of a building.

As shown Figs. 12 and 13, the indoor unit 2 of this embodiment is a so-called in-ceiling embedded and four-way blow-out type indoor unit 2, and the housing 20 of the indoor unit 2 is embedded in a substantially rectangular ceiling hole 102 formed in the ceiling 101 of a building.

As shown in Figs. 12 and 13, the housing 20 is designed in a substantially rectangular box-shape having an open lower surface (the upper side in Fig. 13). Suspending tags 103 are provided at the four corners of the housing 20, and fixed to suspending bolts 104 suspended from the back side of the ceiling, whereby the housing 20 is suspended in the ceiling space.

A face panel 32 which is formed in a substantially square shape in plan view is provided to the lower surface of the housing 20, and the ceiling hole 102 is covered by the face panel 32. An air suction port 33 from which indoor air is sucked into the housing 20 is formed substantially at the center of the face panel 32 in plan view. A filter 35 is mounted inside the air suction port 33, that is, at the back side of the ceiling. Furthermore, air blow-out ports 34 are formed at the four sides of the face panel 32 so as to be elongated along the respective sides. Air is blown out in four directions from the air blow-out ports 34 to the room.

As shown in Fig. 11, an electrolytic unit 5, a check valve 28, an electrically-driven valve 29, a control board 31 and a change-over valve 30 of this embodiment are arranged on a setting panel P, and all these elements are covered by a cover C and arranged in the opening 20c provided to the side surface of the housing 20.

Next, the main part of the internal construction of the housing 20 according to the third embodiment will be described.

In the housing 20 of the third embodiment, in addition to the construction of the first embodiment, a water supply pipe 30A connected to the change-over valve 30 is disposed so that the water supply port thereof faces the drain pan 24. At this time, the suction port of the suction pipe 27A of the drain pump and the water supply port of the water supply pipe 30A are arranged on a substantially diagonal line of the drain pan 24 so that water from the water supply source is supplied to the uppermost stream side while the drain pump 27 side is set to the lowermost stream side.

Next, the operation when the operation is stopped in the third embodiment will be described.

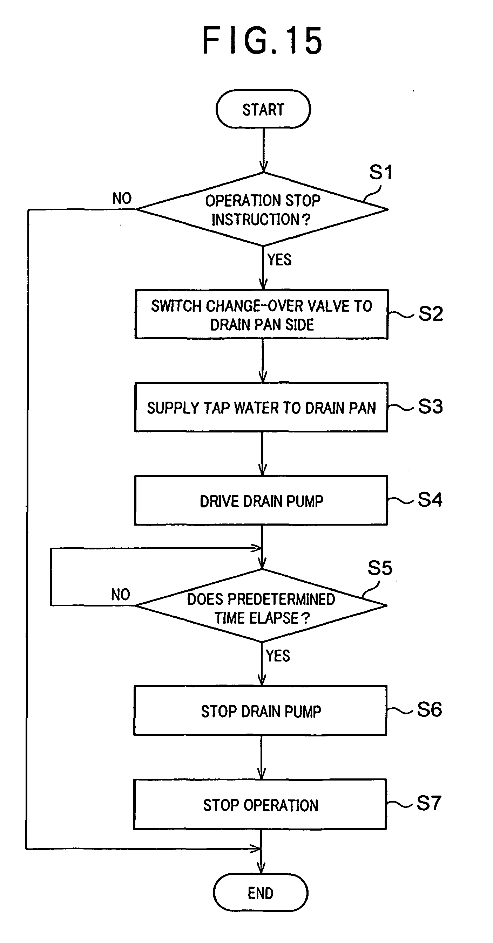

Fig. 15 is a flowchart showing the processing when the operation is stopped.

First, in cooperation with a controller (not shown) of the indoor unit 2, a controller (not shown) on the control board 31 identifies whether an operation stop instruction is output or not (step S1). The controller (not shown) on the control board 31 finishes the processing if it is judged in step S1 that no operation stop instruction is output (step S1; No). If it is judged in step S1 that an operation stop instruction is output (step S1; Yes), the controller (not shown) on the control board 31 switches the change-over valve 30 to the drain pan 24 side, that is, to the water supply pipe 30A side (step S2)

Accordingly, water supplied from the distributing pipe 62 through the check valve 28 and the electrically-driven valve 29 can be directly supplied to the drain pan 24 without being passed through the electrolytic unit 5.

In this case, as described above, the suction port of the suction pipe 27A of the drain pump and the water support port of the water supply pipe 30A are arranged on the substantially diagonal line of the drain pan 24 so that water from the water supply source is supplied to the uppermost stream side while the drain pump 27 side is set to the lowermost stream side. Therefore, the post-filtering electrolytic water in the drain pan 24 is washed with water, and further the concentration of the active oxygen species or the concentrations of various kinds of ion species in electrolytic water are lowered. Under this state, the controller on the control board 31 drives the drain pump 27 (step S4).

As a result, post-filtering electrolytic water containing a low concentration of active oxygen species or ions is sucked from the suction port of the suction pipe 27A of the drain pump 27, and discharged to the outside.

The controller on the control board 31 judges whether a predetermined time elapses from the time when the drain pump 27 is driven, that is, there elapses a sufficient time in which the post-filtering electrolytic water in the drain pan 24 is sufficiently discharged and the post-filtering electrolytic water containing a high concentration of active oxygen species or ions is changed to the post-filtering electrolytic water containing a low concentration of active oxygen species or ions (step S5).

If it is judged in step S5 that no predetermined time elapses from the time when the drain pump 27 is driven (step S5; No), the controller on the control board 31 is set to a standby state.

If it is judged in step S5 that the predetermined time elapses from the time when the drain pump 27 is driven (step S5; Yes), the controller on the control board 31 stops the drain pump 27 (step S6), and notifies it to the controller of the indoor unit 2 that the cleaning is completed, so that the indoor unit 2 is set to the operation stop state (step S7).

As described above, according to the third embodiment, before the operation of the indoor unit 2 constituting the air conditioning system 100 is stopped, the concentration of ions (particularly, the concentration of chlorine ions) contained in the post-filtering electrolytic water can be lowered, and even when a part of the indoor heat exchanger 21 is immersed in the return water from the drain pump to the drain pan, the corrosion of the indoor heat exchanger 21 can be suppressed.

In the foregoing description, water is supplied to one place of the drain pan 24 from the change-over valve 30 to the water supply pipe 30A, however, water may be supplied to plural places.

### [4] Modifications of the Embodiments

In the foregoing description, the first embodiment or the second embodiment and the third embodiment are described as different embodiments. However, both the first and third embodiments or both the second embodiment and the third embodiments may be combined with each other. According to this combination construction, the corrosion-resisting performance can be more remarkably enhanced.

Furthermore, in the foregoing description, one air filtering unit 4 is provided. However, a plurality of air filtering units 4 may be provided in connection with the air blow-out ports 34.

Still furthermore, in the foregoing description, the so-called in-ceiling embedded and four-way blow-out type indoor unit 2 is described. However, the indoor unit of the present invention is not limited to this type of indoor unit, and it may be a ceiling-suspended type, a wall-suspended type or an on-floor mount type indoor unit.

The gas-liquid contact member 41 of the air filtering unit 4 may be disposed substantially in parallel to or obliquely to the indoor heat exchanger 21.

Furthermore, in the above embodiments, hypochlorous acid is generated as the active oxygen species, however, ozone (O₃) and hydrogen peroxide (H₂O₂) may be generated as the active oxygen species. In this case, when platinum tantalum electrodes are used as the electrodes 53a, 53b, the active oxygen species can be generated highly efficiently and stably from even ion-species rare water by electrolysis, and thus the amount of ion species to be added by the ion species adding unit 7 can be reduced.

At this time, at the anode, the following reaction occurs:

2H₂O → 4H⁺ + O₂ + 4e⁻

Simultaneously with the above reaction, the following reactions occur, and ozone (O₃) is generated.

3H₂O → O₃ + 6H⁺ + 6e⁻

2H₂O → O₃ + 4H⁺ + 4e⁻

Furthermore, at the cathode, the following reactions occur:

4 H⁺ + 4e⁻ + (4OH⁻) → 2H₂ + (4OH⁻)

O₂⁻ + e⁻ + 2H⁺→ H₂O₂

That is, O₂⁻ generated through the electrode reaction and H⁺ in solution are bonded to each other to generate hydrogen peroxide (H₂O₂) .

In this construction, ozone (O₃) and hydrogen peroxide (H₂O₂) which have strong sterilizing power are generated by supplying current to the electrodes 53a, 53b, and electrolytic water containing ozone (O₃) and hydrogen peroxide (H₂O₂) can be created. The concentration of ozone or hydrogen peroxide in electrolytic water is adjusted to a value suitable for inactivate target virus or the like and air is passed through the gas-liquid contact member 41 supplied with the electrolytic water having this concentration, whereby target virus, etc. floating in the air can be inactivated. Furthermore, when gaseous material such as odor or the like is passed through the gas-liquid contact member 41, it reacts with ozone or hydrogen peroxide in the electrolytic water when passing through the gas-liquid contact member 41, and ionized and dissolved in the electrolytic water, whereby the odor materials are removed from the air and thus the air is deodorized.

Furthermore, when scales are deposited on the electrodes 53a, 53b (cathode) due to electrolysis of tap water or the like, the electrical conductivity is lowered, or flow of water to the electrolysis plane is disturbed, so that it is difficult to continue electrolysis. In this case, it is effective to invert the polarities of the electrodes 53a, 53b (the plus and minus polarities of the electrodes 53a, 53b are switched to each other). By conducting electrolysis by using a cathode as an anode, the scales deposited on the cathode electrode can be removed. This polarity inverting control may be periodically performed by using a timer, or irregularly performed every time the operation is started. Furthermore, increase of the electrolysis resistance (decrease in electrolysis current, or increase in electrolysis voltage may be detected and the polarities may be inverted on the detection result.

## Claims

1. An air conditioner having a refrigerant circuit (100B) comprising a compressor (11), a four-way valve (13), an outdoor heat exchanger (14) and an indoor heat exchanger (21) which are successively connected to one another, the indoor heat exchanger (21) being provided in an indoor unit (2), furthermore comprising:
an air blowing fan (22) for introducing air into the indoor unit and blowing out heat-exchanged air into a room;
an electrolytic water supply unit (5) for electrolyzing water containing a predetermined ion species supplied from an external water supply tank to generate electrolytic water containing active oxygen species;
an air filtering unit (4) for bringing the electrolytic water into contact with air introduced into the indoor unit (2) by the air blowing fan (22) to filter the air;
a drain pan (24) that is provided below the indoor heat exchanger (21) and the air filtering unit (4) and receiving condensed water of the indoor heat exchanger (21) under cooling operation and the electrolytic water after the air filtering;
a drain pump (27) for discharging liquid received in the drain pan (24) to the outside of the indoor unit (2); and charcterized in that
an corrosion-resisting member (21C) is formed at a part of the indoor heat exchanger (21) which is immersed in return water from the drain pump (27) to the drain pan (24) at least when the drain pump (27) is stopped.

2. The air conditioner according to claim 1, wherein the corrosion-resistingmember is formed at the part of the indoor heat exchanger which is immersed in the return water, and also at a fin and a refrigerant pipe constituting the indoor heat exchanger at the surrounding portion of the part of the indoor heat exchanger.

3. The air conditioner according to claim 1, wherein the corrosion-resisting member is formed of hydrophilic material.

4. The air conditioner according to claim 1, wherein the corrosion-resisting member is formed by coating of inorganic paint of liquid glass or room-temperature glass coating.

5. The air conditioner according to claim 1, wherein the ion species is halide ion.

6. The air conditioner according to claim 1, wherein the active oxygen species contains at least one material selected from the group consisting of hypochlorous acid, ozone and hydrogen peroxide.

## Patentansprüche

1. Klimaanlage mit einem Kältemittelkreis (100B) mit einem Kompressor (11), einem Vierwegeventil (13), einem Außenwärmetauscher (14) und einem Innenwärmetauscher (21), die aufeinanderfolgend miteinander verbunden sind, wobei der Innenwärmetauscher (21) in einer Inneneinheit (2) vorgesehen ist, mit ferner:
einem Luftgebläse (22) zum Einbringen von Luft in die Inneneinheit und zum Ausblasen von wärmegetauschter Luft in einen Raum,
einer Elektrolytwasserzufuhreinheit (5) zum Elektrolysieren von Wasser, das eine vorgegebene Ionenart enthält und von einem externen Wasserzufuhrtank geliefert wird, um elektrolytisches Wasser zu erzeugen, das eine aktive Sauerstoffspezies enthält,
einer Luftfiltereinheit (4) zum Bringen des elektrolytischen Wassers in Kontakt mit Luft, die durch das Luftgebläse (22) in die Inneneinheit (2) eingebracht wurde, um die Luft zu filtern,
einer Ablaufwanne (24), die unterhalb des Innenwärmetauschers (21) und der Luftfiltereinheit (4) angeordnet ist und Kondenswasser des Innenwärmetauschers (21) beim Kühlbetrieb und elektrolytisches Wasser nach der Luftfilterung aufnimmt,
einer Ablaufpumpe (27) zum Abführen von Flüssigkeit, die in der Ablaufwanne (24) aufgenommen ist, zur Außenseite der Inneneinheit (2) und **dadurch gekennzeichnet, dass** ein korrosionsbeständiges Element (21C) an einem Teil des Innenwärmetauschers (21) ausgebildet ist, der in einem Rückkehrweg von der Ablaufpumpe (27) zur Ablaufwanne (24), zumindest wenn die Ablaufpumpe (27) angehalten ist, angeordnet ist.

2. Klimaanlage nach Anspruch 1, wobei das korrosionsbeständige Element an dem Teil des Innenwärmetauschers ausgebildet ist, der in das Rücklaufwasser eingetaucht ist, und auch an einer Rippe und einer Kältemittelleitung, die den Innenwärmetauscher an einem Umgebungsteil des Teils des Innenwärmetauschers bilden.

3. Klimaanlage nach Anspruch 1, wobei das korrosionsbeständige Element aus einem hydrophilen Material gebildet ist.

4. Klimaanlage nach Anspruch 1, wobei das korrosionsbeständige Element durch eine Beschichtung einer anorganischen Farbe aus Flüssigglas oder einer Raumtemperaturglasbeschichtung gebildet ist.

5. Klimaanlage nach Anspruch 1, wobei die Ionenspezies ein Halidion ist.

6. Klimaanlage nach Anspruch 1, wobei die aktive Sauerstoffspezies zumindest ein Material aufweist, das ausgewählt ist aus der Gruppe, die besteht aus Hypochlorsäure, Ozon und Wasserstoffperoxid.

## Revendications

1. Climatiseur ayant un circuit de fluide frigorigène (100B) comprenant un compresseur (11), une soupape à quatre voies (13), un échangeur de chaleur extérieur (14) et un échangeur de chaleur intérieur (21) qui sont successivement raccordés l'un à l'autre, l'échangeur de chaleur intérieur (21) étant disposé dans une unité intérieure (2), comprenant en outre :
un ventilateur de soufflage d'air (22) pour introduire de l'air dans l'unité intérieure et souffler de l'air d'un échange de chaleur dans une pièce ;
une unité d'alimentation en eau électrolytique (5) permettant d'électrolyser de l'eau contenant une espèce d'ion prédéterminée alimentée depuis un réservoir d'alimentation en eau externe afin de générer de l'eau électrolytique contenant des espèces d'oxygène actif ;
une unité de filtration d'air (4) permettant d'amener l'eau électrolytique en contact avec l'air introduit dans l'unité intérieure (2) par le ventilateur de soufflage d'air (22) afin de filtrer l'air ;
un bac de vidange (24) qui est agencé sous l'échangeur de chaleur intérieur (21) et l'unité de filtration d'air (4) et recevant de l'eau condensée de l'échangeur de chaleur intérieur (21) dans une opération de refroidissement et l'eau électrolytique après la filtration d'air ;
une pompe d'épuisement (27) pour décharger le liquide reçu dans le bac de vidange (24) vers l'extérieur de l'unité intérieure (2) ; et **caractérisé en ce que**
un organe résistant à la corrosion (21C) est formé au niveau d'une partie de l'échangeur de chaleur intérieur (21) qui est immergé dans l'eau de retour de la pompe d'épuisement (27) au bac de vidange (24) au moins lorsque la pompe d'épuisement (27) est arrêtée.

2. Climatiseur selon la revendication 1, dans lequel l'organe résistant à la corrosion est formé au niveau de la partie de l'échangeur de chaleur intérieur qui est immergée dans l'eau de retour, et également au niveau d'une ailette et d'un tuyau de fluide frigorigène constituant l'échangeur de chaleur intérieur au niveau de la portion entourant la partie de l'échangeur de chaleur intérieur.

3. Climatiseur selon la revendication 1, dans lequel l'organe résistant à la corrosion est formé de matériau hydrophile.

4. Climatiseur selon la revendication 1, dans lequel l'organe résistant à la corrosion est formé par revêtement de peinture inorganique de verre liquide ou par revêtement de verre à température ambiante.

5. Climatiseur selon la revendication 1, dans lequel les espèces d'ion sont des ions halogénure.

6. Climatiseur selon la revendication 1, dans lequel les espèces d'oxygène actif contiennent au moins un matériau choisi dans le groupe consistant en l'acide hypochloreux, l'ozone et le peroxyde d'hydrogène.
